# EUROPEAN PATENT APPLICATION

(11) **EP 4 302 912 A1**
(43) Date of publication of application: **10.01.2024**
(21) Application number: 23182038.2
(22) Date of filing: 28.06.2023
(51) Int. Cl.: B23K 9/04, B22F 10/22, B22F 10/25, B22F 10/50, B22F 12/37, B23K 10/02, B23K 15/00, B23K 26/342, B23K 37/04, B23K 37/06, B33Y 10/00, B33Y 30/00, B33Y 40/00

(54) **ADDITIVE MANUFACTURING SYSTEM AND METHOD FOR COMPRESSION OF MATERIAL DURING MATERIAL DEPOSITION**

(30) Priority: 08.07.2022 IT 202200014428
(71) Applicant: Ge Avio S.r.l., Rivalta di Torino (IT)
(72) Inventor: Peradotto, Edoardo Maria, 10040 Rivalta di Torino (IT); Mondino, Ivan, 10040 Rivalta di Torino (IT); De Grassi, Alessandro, 10040 Rivalta di Torino (IT)
(74) Representative: Hafner & Kohl PartmbB

(57) **Abstract**

A directed energy deposition (DED) additive manufacturing system may be utilized for manufacturing a cylindrical component from a feedstock material. The DED additive manufacturing system may comprise a rotary build table, a deposition assembly for depositing melted feedstock to form the component upon rotation of the build table, and a compression rig positioned proximate the deposition assembly and operable to continuously apply a compressive load to deposited melted feedstock material during deposition of the melted feedstock material.

## Description

### TECHNICAL FIELD

The present disclosure generally relates to additive manufacturing and, more particularly, to additive manufacturing systems and methods that can conduct compression of material while conducting material deposition.

### BACKGROUND

Additive manufacturing is a suite of emerging technologies that may be used to fabricate three-dimensional objects directly from digital models through an additive process, typically by depositing material layer upon layer and joining successive layers in place. Directed energy deposition ("DED") is a type of additive manufacturing process utilized to fabricate new parts and/or to repair or add additional material to existing components. Using DED, components can be made (or repaired) layer-by-layer using a directed flow of feedstock material from a deposition nozzle. DED apparatuses use a focused energy source, such as a laser or electron beam, to melt the feedstock material and simultaneously deposit the melted material on a specified surface, where such melted material solidifies and fuses with other deposited materials, to thereby form the component layer-by-layer.

The energy source is provided in the deposition nozzle, which includes one or more material delivery nozzles which converge at the point of material deposit and where the energy source is focused. The feedstock material is melted as it exits the deposition nozzle and is deposited on a build table or on a previously deposited layer of material.

DED apparatuses may also be configured to apply compression to each layer or a set of layers after being deposited. These types of DED apparatuses generally include a fixed build table, a large robotic arm supporting the deposition nozzle that may articulate over the table so as to deposit the layer of material from the deposition nozzle during a deposition phase, and a compression apparatus that may subsequently articulate over the build table to apply compression during a compression phase such as by, for example, peening, hammering, rolling, and the like.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 illustrates a DED additive manufacturing system, according to one or more embodiments of the present disclosure;
FIG. 2 is a detailed view of the compressive head of FIG. 1;
FIG. 3 is a top view of the DED additive manufacturing system of FIG. 1 illustrating example operation;
FIG. 4A is a perspective view of an alternate DED additive manufacturing system, according to one or more other embodiments of the present disclosure;
FIG. 4B is a front view of the DED additive manufacturing system of FIG. 4A;
FIG. 4C is a detailed view of a compression rig of the DED additive manufacturing system of FIGS. 4A and 4B;
FIG. 4D is a detailed front view of a compression head of the compression rig of FIG. 4C; and
FIG. 5 is a flow chart illustrating an embodiment of a DED additive manufacturing method.

### DETAILED DESCRIPTION

DED additive manufacturing systems operate in phases, including a deposition phase, where material is deposited to form a component, and a compression phase, where the material is compressed; however, the deposition phase and the compression phase typically occur sequentially, one after another, and cannot act continuously or simultaneously. For example, when the deposition phase is ongoing, the compression equipment is positioned outside of the working volume waiting for conclusion of the deposition phase, and vice versa. Therefore, the total processing time of a component would be the sum of the deposition time and the compression time, which can be quite time consuming and adversely impact the overall cost of manufacturing. Furthermore, with this type of design, the compression would be applied on a material layer having variable temperature, which can cause unevenness at the microstructure level and, moreover, because of the gap in time between deposition and compression, these designs cannot produce components with forging like qualities or characteristics. Accordingly, the embodiments described herein are directed to a DED additive manufacturing system having a deposition head and compression rig that may be utilized simultaneously without interfering with each other. The presently disclosed embodiments are capable of implementing a local forging process within a DED process without adding a significant amount of time and cost.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom, upper, lower - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

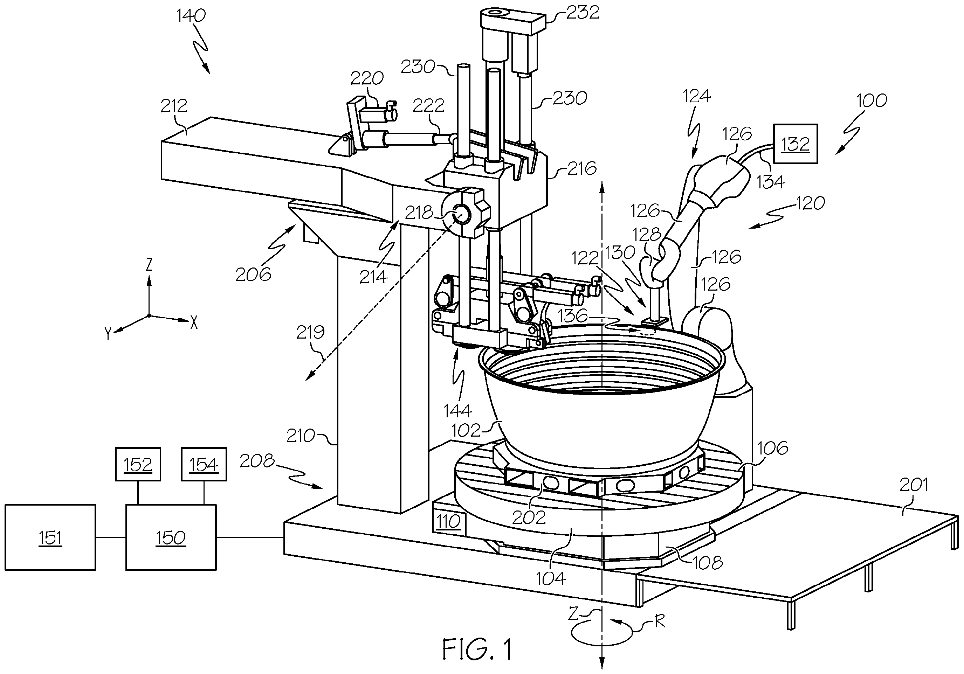

Referring now to FIG. 1, a DED additive manufacturing system 100 (hereinafter, the system 100) is illustrated according one or more embodiments of the present disclosure. The system 100 is configured to construct or build a component 102 from a feedstock material. In the illustrated example, the component 102 is a cylindrically shaped component, but in other examples, the component 102 may have a different geometry.

As illustrated, the system 100 includes a build table 104. At least a portion of the build table is configured to rotate about a vertical axis Z of the build table 104, thereby rotating the component 102 supported on the build table. Thus, the build table 104 is a rotary build table. In particular, the build table 104 defines a build surface 106 on which the component 102 is built and supported. Here, the build surface 106 is oriented in the X-Y plane and is thus a horizontal build surface, but the build surface 106 may have other orientations. In the illustrated embodiment, the build table 104 is disposed on a base 108. The base 108 may include an actuator 110 that moves (rotates) the build table 104 about the vertical axis Z in a clockwise or counterclockwise rotation direction. In the illustrated embodiment, the actuator 110 rotates the build table 104 in a counterclockwise direction R about the vertical axis Z. Also, as hereinafter described, the actuator 110 rotates the build table 104 at a variable rotation speed. In some examples, the base 108 is further configured to move (translate) the build table 104 vertically along the vertical axis Z (e.g., in the Z-dimension depicted in FIG. 1).

In the illustrated embodiment, a pallet 202 is provided on the build surface 106 of the build table 104 and the component 102 is built on the pallet 202. In this manner, upon completion of manufacturing the component 102, a forklift or other material handling equipment may be utilized to engage the pallet 202 and remove the component 102 when finished from the build table 104. Where utilized, the pallet 202 may be selectively secured to the build table 104, for example, with mechanical fasteners and/or a locking system.

The system 100 also includes a deposition assembly 120. The deposition assembly 120 has a deposition head 122 through which a stream of feedstock material may be deposited to fabricate the component 102. As described herein, the feedstock material is melted and output from the deposition head 122, as a stream of melted feedstock material, at a deposition rate. The deposition assembly 120 includes a structure that adjustably and movably supports the deposition head 122. In the illustrated example, the deposition assembly 120 includes a robotic arm 124 comprising a plurality of links 126 that may articulate relative to each other so as to adjust the position of the deposition head 122 which is supported on a distal most link 128 of the plurality of links 126. Accordingly, it should be understood that the deposition head 122 and the build table 104 are movable relative to each other. For example, the robotic arm 124 may include one or more actuators that rotate the links 126,128 of the robotic arm relative to one another so as to move the robotic arm 124 and the deposition head 122 supported thereon relative to the build table 104. It will be appreciated that the robotic arm 124 may have various other configurations for moving and adjusting position of the deposition head 122 in multiple degrees of freedom without departing from the present disclosure.

The deposition assembly 120 includes an energy source 130 and a material source 132. The material source 132 is configured to convey the feedstock material to the deposition head 122 where it is deposited on the build table 104. In the illustrated embodiment, the material source 132 is a material spool and feeder system configured to convey a wire 134 (e.g., a metal or polymer-based wire) to the deposition head 122. Thus, the material source 132 may house the wire 134 that is fed to the deposition head 122. For example, the wire 134 may be routed externally of the robotic arm 124 to the deposition head 122 or through an internal cavity of the robotic arm 124 that connects to the deposition head 122. In other embodiments, rather than being a material spool and feeder system configured to convey the wire 134, the material source 132 may comprise a pressurized powder source that conveys a pressurized stream of powder feedstock material to one or more material delivery devices (e.g., nozzles, valves, or the like) of the deposition head 122. Any suitable feedstock material capable of being used in DED processes may be used consistent with the present disclosure.

The energy source 130 may take various forms depending on the implementation. In the illustrated example, the energy source 130 is a plasma transferred arc heat source. In other examples, the energy source 130 may include a laser source and optics configured to direct a laser beam having a desired energy density to the build surface 106 of the build table 104. In some examples, the energy source 130 may include an electron emitter connected to a power supply and at least one focusing coil configured to direct an electron beam to the component 102 being constructed on the build surface 106 of the build table 104. In such embodiments, the build table 104 may be placed in a build chamber (not depicted) under a vacuum or having an oxygen-reduced environment. However, the energy source 130 may take various other forms, such as a plasma source, an electron beam source, etc. In embodiments, the energy source 130 may comprise multiple energy sources, such as a laser source and a plasma transferred arc.

It should be understood that the system 100 may include any number of energy sources and material sources in accordance with the present disclosure. Additionally, feedstock material from the material source 132 may be routed to the deposition head 122 in various ways for emission onto the build table 104. For example, in embodiments, the wire 134 from the material source 132 may be divided into two or more material feeds that are routed through the robotic arm 124 into the deposition head 122. Each material feed may exit the deposition head 122 at a separate delivery nozzle as a material stream.

In operation, one or more streams of feedstock material are fed into a path of an energy beam from the energy source 130 and emitted by the deposition head 122 as a stream of melted feedstock material. In particular, at points of overlap between the energy beam and the stream(s) of feedstock material where the energy beam possesses the requisite energy density, the energy may heat the feedstock material to a sufficient extent to form a melt pool 136 on the build surface 106. Melted feedstock material may continuously be fed through and deposited from the deposition head 122 such that the melt pool 136 forms a pattern corresponding to the movement pattern of the deposition head 122 and the build table 104. Movements of the deposition head 122 and the build table 104 may be determined based on a desired shape of the component 102 being built such that, as the melt pool 136 cools, the feedstock material hardens to form a portion of the component 102. For example, rotation of the build table 104 about the vertical axis Z as the deposition head 122 deposits the melt pool 136 results in a circular shaped stream of melted feedstock material that, as the build table 104 continuously rotates over time, will layer upon itself and build a cylindrical shaped component, such as the component 102. Also, the robotic arm 124 may position the deposition head 122 radially towards or away from the vertical axis Z so as to create a non-circular shaped component with a varying size and diameter as illustrated.

The system 100 further includes a compression rig 140. The compression rig 140 is positioned proximate the deposition assembly 120 and operable to continuously apply a compressive load to the deposited feedstock material which forms the component 102. As described herein, the compression rig 140 is configured to apply a compressive load to the component 102 (i.e., a compression phase) during (or simultaneously with) a deposition phase where the deposition assembly 120 is depositing the stream of melted feedstock material to build the component 102, such that the compression rig 140 may compress a portion of the deposited stream of melted feedstock material that is downstream of the deposition assembly 102 while the deposition assembly 120 continues to deposit the stream of melted feedstock material. In the illustrated embodiment, the compression rig 140 includes at least one actuator and a load source 144, as further described below.

Generally, the at least one actuator is configured to move and manipulate orientation of the load source 144 relative to the portion of the component 102 to which compressive load is to be applied. The load source 144 applies a force to the deposited material to introduce the required strain level in the deposited layer and/or improve mechanical properties of the component 102, for example, grain refinement and recrystallization.

As described herein, the robotic arm 124 is operable to position the deposition head 122 in close proximity of the load source 144 and/or the compression rig 140 is operable to position the load source 144 in close proximity of the deposition head 122. The distance between the load source 144 and the deposition head 122 may be increased if cold rolling is intended, for example, by rotating the build table 104 in an opposite clockwise direction. In this manner, it is possible to operate the deposition head 122 to deposit melted feedstock material in the melt pool 136 while the load source 144 applies the compressive load to the component 102, with the load source 144 trailing the deposition head 122 such that the load source 144 applies load to previously deposited material a short time thereafter depending on the rotation speed of the build table 104. Thus, the compression rig 140 may apply compressive load to the component 102 at the same time as the deposition head 122 is creating the melt pool 136, at least in close proximity to the melt pool 136 of the component 102. Not only does this decrease machine cycle time, but also allows the compressive load to be applied to the component 102 at a constant temperature and at a temperature suitable to provide the component 102 with forge-like qualities. A grain refinement mechanism responsible for the forge-like properties may be utilized to provide static or dynamic recrystallization. It should be appreciated that cold rolling is capable of producing static recrystallization when the material is first strained at an ambient temperature and then re-heated with a consequent grain refinement. The re-heat in DED is provided by the most recent layer deposition to the layer(s) below.

In embodiments, the system may further comprise a controller 150. The controller 150 may be communicatively coupled to the build table 104, the deposition assembly 120, the compression rig 140, and/or the material source 132. Thus, the controller may be in communication with the base 108, the robotic arm 124, and/or the compression rig 140 so as to control operation of the same. For example, the controller 150 may comprise a processor and memory storing computer readable instructions which, when executed by the processor, dynamically controls rotation direction and/or rotation speed of the build table 104 about the vertical axis Z, vertical translation of the build table 104 along the vertical axis Z, position and orientation of the deposition head 122 in space via the robotic arm 124, position and orientation of the load source 144 in space, and/or the magnitude of compressive load applied by the load source 144. The controller 150 may also be configured to control the feed rate at which the material source 132 feeds or supplies the feedstock material to the deposition head 122 and/or control the deposition rate at which the stream of melted feedstock material is output from the deposition head 122.

In embodiments, the system 100 may have various sensors communicatively coupled to the controller 150, and the controller 150 may utilize data communicated from the various sensors to control operation of the build table 104, the deposition assembly 120, the compression rig 140, and/or the material source 132 as may be desired for fabricating the component 102. In some examples, a sensor system 151 may be provided that scans the component 102 so as to measure the dimensions of the component 102 as it is being formed. For example, lasers or cameras could be utilized to monitor the geometry of the component 102 and control the orientation of the deposition assembly 120 and/or the compression rig 140 based on that sensed data.

In some examples, the system 100 includes one or more temperature sensors 152 and/or one or more stress sensors 154. The temperature sensor 152 may be configured to measure a surface temperature of the layer of feedstock material deposited via the deposition head 122 inside and/or outside of the melt pool 136. In some embodiments, the temperature sensor 152 may include at least one pyrometer or thermal camera configured to check the actual surface temperature of the deposited feedstock material. The temperature sensor 152 is communicably coupled to the controller 150 (e.g., associated with a remainder of the system 100) which includes control logic that evaluates the measurements of the temperature sensor 152. In embodiments, the controller 150 is configured to determine if a temperature of the feedstock material is suitable for a counterbalancing treatment via the load source 144. For example, a suitable temperature range for compressive load treatments may be determined based on material properties (e.g., plasticity, coefficient of thermal expansion, and the like) associated with the feedstock material deposited via the deposition head 122. In some embodiments, the controller 150 is configured to control relative position between the deposition head 122 and the load source 144 based on the measurements of the temperature sensor 152. For example, the controller 150 may cause movement of the deposition head 122 nearer or further from the load source 144 so as to ensure that the compressive load is being applied to material having a desired constant temperature. If a measurement of the temperature sensor 152 indicates that a previously deposited feedstock material is not suitable for compression or not uniform with previously compressed feedstock material, the controller 150 may transmit control signals to the actuator 110 of the build table 104 to vary rotation speed and/or transmit control signals to the robotic arm 124 to adjust a positioning of the deposition head 122.

Referring still to FIG. 1, in embodiments, the stress sensor 154 may be configured to measure a residual stress in the layer of feedstock material after the compression treatments are performed via the load source 144. The stress sensor 154 is communicably coupled to the controller 150 (e.g., associated with a remainder of the system 100) which includes control logic that evaluates the readings of the stress sensor 154. The stress sensor 154 may include an ultrasonic stress sensor or the like. In embodiments, the controller 150 may be configured to determine if the stress measurements obtained via the stress sensor 154 are within an acceptable threshold to ensure high build quality. If the measurements are outside of the threshold, the controller 150 may modify various parameters of the build process. In embodiments, if an unacceptable amount of residual stress is detected, the controller 150 may modify operation of the compression rig 140 (e.g., by modifying the load application parameters such as force magnitude, and the like) to correct for the residual stress in the component 102 being outside of an acceptable range, wherein residual stress may be the combination of thermal stress given by the cooling after deposition and the mechanical stress caused by compression. In embodiments, if an unacceptable amount of residual stress is detected, the controller 150 may modify various operating parameters associated with the deposition head 122 (e.g., energy beam power, movement speed, material feed rate) to reduce residual stress in the component 102.

In the illustrated example, the deposition head 122 deposits feedstock material to fabricate the component 102 on the build table 104 while the build table 104 rotates in the counterclockwise direction R about the vertical axis Z and, as the build table 104 continues to rotate the component 102 in the counterclockwise direction R, the feedstock material previously deposited by the deposition head 122 will encounter the load source 144 after being deposited from the deposition head 122. Thus, in the illustrated embodiment, the deposition head 122 acts on a particular portion of the component 102 before the load source 144 acts on that particular portion of the component and, similarly, the load source 144 acts on a particular portion of the component 102 after the deposition head 122 has acted on that particular portion of the component 102. Stated differently, because the build table 104 rotates in the counterclockwise direction R in the illustrated embodiment, the deposition head 122 is positioned before (or upstream of) the load source 144 and the load source 144 is positioned after (or downstream of) the deposition head 122. In embodiments, the temperature sensor 152 may be positioned before the load source 144 to ensure that the mechanical load is applied at the correct temperature and the stress sensor 154 may be positioned after the load source 144 to determine if the resulting stress is at a desired level (e.g., near zero for a stress-relieving treatment or a negative value if a counterbalancing treatment is being performed to promote grain refinement). In some examples, the temperature sensor 152 may be provided on the deposition assembly 120, for example, proximate the deposition head 122, so as to accurately measure temperature of the melted feedstock material being deposited therefrom. In some examples, the temperature sensor 152 may be provided proximate the load source 144 in addition to or in lieu of the temperature sensor 152 placed proximate the deposition head 122.

By monitoring the surface temperature of the component 102 in close proximity of the load source 144, the system 100 is able to ensure application of compressive load to portions of the component 102 having substantially uniform temperatures while preceding portions of the stream of melted feedstock material are being simultaneously deposited by the deposition head 122.

In the illustrated example, the system 100 further includes a platform 201 on which the other components of the system 100 are mounted. It should be appreciated, however, that a platform 201 is not required, and one or more of the other components of the system 100 may be secured to the ground surface or floor.

Also in the illustrated example, the compression rig 140 includes a support structure 210 and a positioning arm 212. The support structure 210 includes an upper end 206 and a lower end 208 that is opposite of the upper end 206. The positioning arm 212 is slidably attached to the upper end 206 of the support structure 210 such that the positioning arm 212 may translate relative to the support structure 210 (i.e., in the X-dimension). Thus, the compression rig 140 may include one or more actuators (not shown) for causing translation of the positioning arm 212 in the X-dimension.

The positioning arm 212 includes a clevis 214 at one end thereof. The compression rig 140 further comprises a tang 216, which is rotationally supported within the clevis 214 of the positioning arm 212, such that the tang 216 may rotate within and relative to the clevis 214 of the positioning arm 212. In particular, the tang 216 includes a pair of shaft ends or pins 218 protruding from opposite sides of the tang 216, which are retained within the openings of the clevis 214, and the pins 218 may rotate within their respective openings of the clevis 214 such that the tang 216 may rotate about an axis 219 defined by the pins 218.

The tang 216 supports the load source 144 via a plurality of slide members 230 and a linear actuator 232. The slide members 230 are fixed to the load source 144 and extend upward therefrom to the tang 216, which includes a plurality of corresponding slots or openings sized to receive the slide members 230. The slide members 230 may slide within the corresponding slots or openings of the tang 216 such that the load source 144 may slide towards or away from the tang 216. The linear actuator 232 is coupled to the tang 216 and includes a drive rod (obscured) that is coupled to the load source 144. In one example, the drive rod is configured as a screw that is received within a correspondingly threaded bore (obscured from view) provided on the load source 144. Actuation of the linear actuator 232 thereby causes the load source 144 to translate towards or away from the tang 216, for example, in the Z-dimension. Translation of the load source 144 away from the tang 216 (and towards the component 102) may result in application of compression on the component 102. Translation of the load source 144 towards the tang 216 (and away from the component 102) may be useful to position the load source 144 as needed to accommodate growth of the component 102 as it is built.

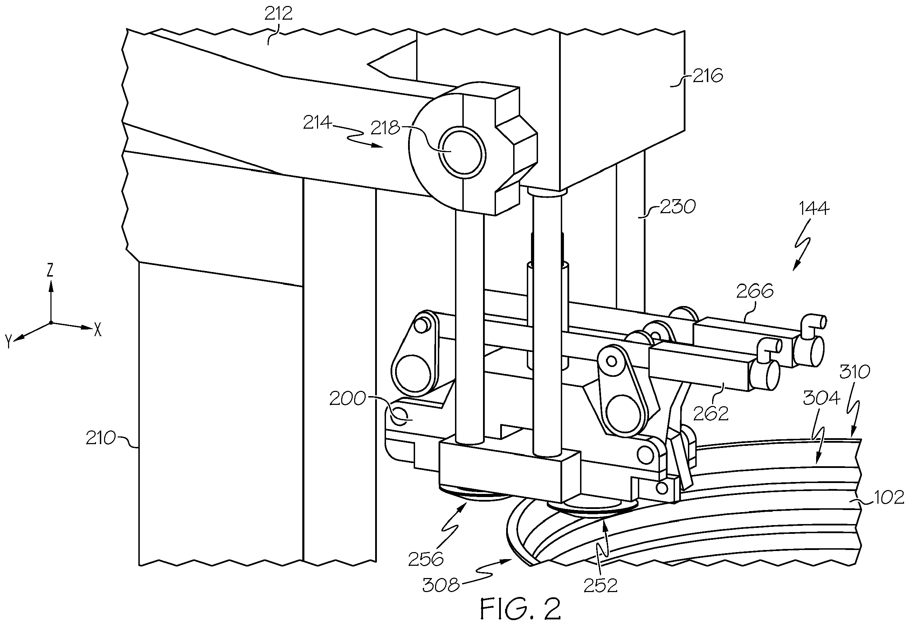

FIG. 1 also illustrates the compression rig 140 configured to apply compressive load via rolling, according to one or more embodiments of the present disclosure. FIG. 2 is a detailed view of the load source 144 of FIG. 1 provided with a plurality of rollers arranged to apply compressive load to the component 102 at various portions of the component 102. In the illustrated example, the load source 144 comprises a compression head 200. The compression head 200 is configured to rotatably retain a plurality of rollers at various orientations so as to roll upon certain portions of the component 102. In some examples, the compression head 200 is configured to measure the compressive load applied by each roller through one or more sensors operably associated with each roller.

Here, the compression head 200 supports at least one inside roller 202 positioned and oriented to contact an interior side surface 304 of the component 102 and to roll there-along as the component 102 is rotated by the build table 104. The compression head 200 also supports at least one outside roller 206 positioned and oriented to contact an exterior side surface 308 of the component 102 and to roll there-along as the component 102 is rotated by the build table 104. In the illustrated example, the at least one inside roller 252 and the at least one outside roller 256 (together referred to as the side rollers 252, 256) are oriented such that they are each rotatable about an axis extending in the Z-dimension; however, it will be appreciated that they may rotate about axes oriented along different vectors in the x-z plane.

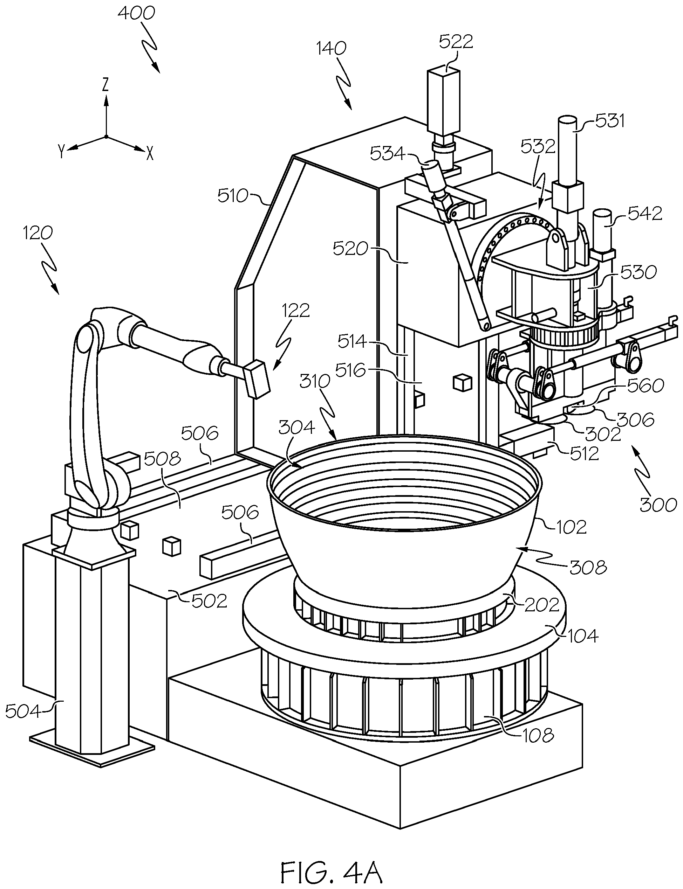

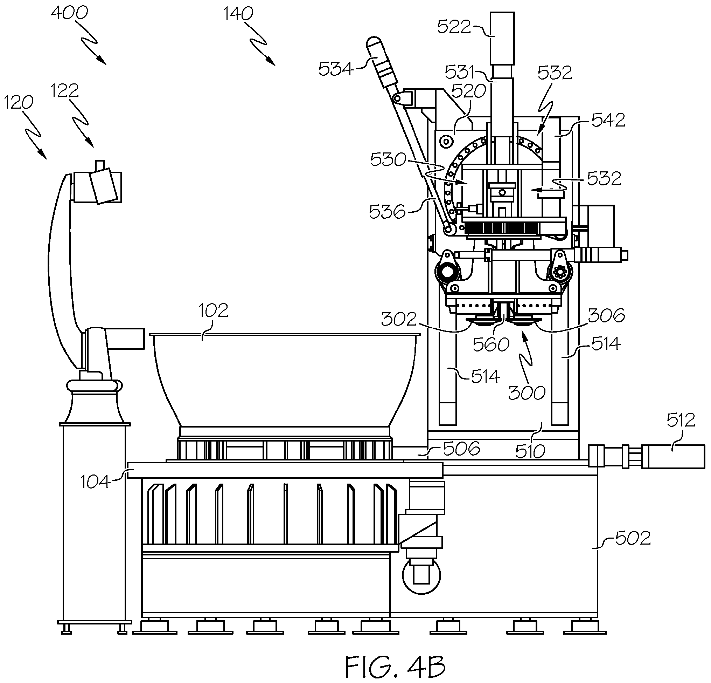

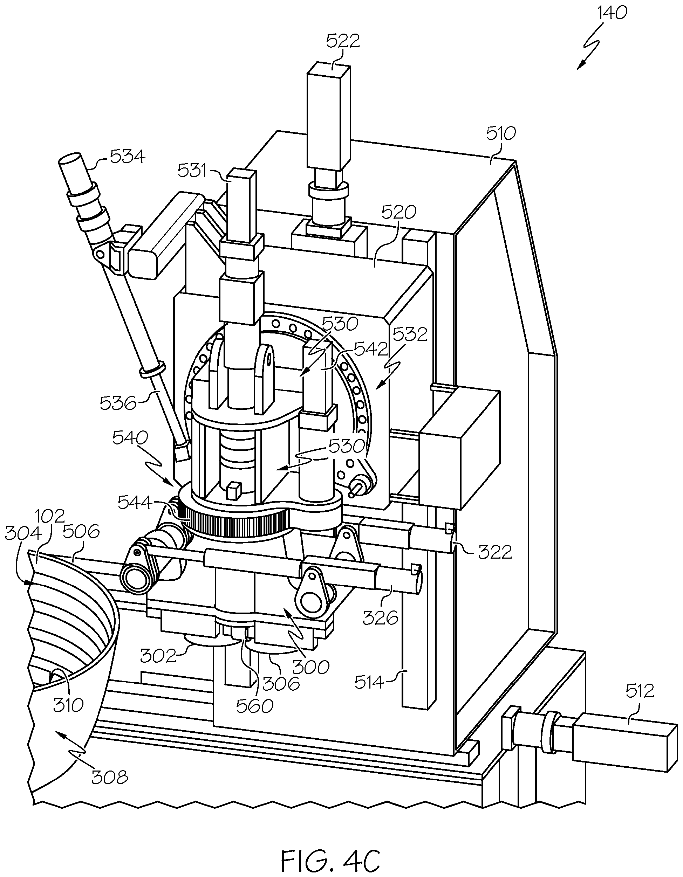

In addition, in this example, the compression head 200 supports at least one top roller (See FIGS. 4A-4D) positioned and oriented to contact a top surface 310 of the rim of the component 102 and to roll there-along as the component 102 is rotated by the build table 104. Here, the top roller is oriented such that it is rotatable about an axis extending in the X-dimension; however, it will be appreciated that they may rotate about axes oriented along different vectors in the X-Z plane.

Each of the side rollers 252, 256 and the top roller are freely rotatably about their respective axis of rotation, and they are each rotated when brought into contact with their respective portion of the component 102 that they are designed to contact (i.e., the interior side surface 304, the exterior side surface 308, and the top surface 310 of the rim of the component 102, respectively) and as the component 102 is rotated. Thus, rotation of the component 102 causes roller rotation and the rollers need not include any separate drive train(s) to cause their independent rotation. However, in some examples, any one or more of the rollers may be powered.

In embodiments, the side rollers 252, 256 and the top roller may each be configured to apply a compressive load to a respective portion of the component 102. For example, a first compression actuator 262 may be configured to move the inside roller 252 toward the outside roller 256 and the interior side surface 304 of the component 102, and a second compression actuator 266 may be configured to move the outside roller 256 toward the inside roller 252 and the exterior side surface 308 of the component 102. In some embodiments, the compression actuators 262, 266 cause movement of their respective side rollers 252, 256 independent of each other such that, for example, the at least one inside roller 252 could be moved toward the at least one outside roller 256 without a corresponding movement of the at least one outside roller 256 toward the at least one inside roller 252, and *vice versa.* In some examples, the compression actuators 262, 266 operate in unison such that, for example, they may cause movement of the side rollers 252, 256 together with corresponding movements toward the component 102, thereby pinching the component 102, and cause the side rollers 252, 256 to move apart from each other in unison with corresponding movements away from the component 102. In some examples where the side rollers 252, 256 operate in unison to move towards each other and away from each other, the compression actuators 262, 266 may operate in unison to pinch the side rollers 252, 256 together so as to enhance pinching compression force.

The top roller may provide compression to the top surface 310 of the rim of the component 102 via actuation of the linear actuator 232 which may be operated to drive the compression head 200 and the top roller rotatably supported therein toward the component 102, for example, in the Z-dimension. Thus, the side rollers 352, 356 pinch the opposite sides of the component 102 via lateral compression while the top roller presses the top surface 310 of the component 102 via vertical compression. In embodiments, load sensors may be operatively associated with each of the side rollers 352, 356 and the top roller, so as to determine the load applied thereby.

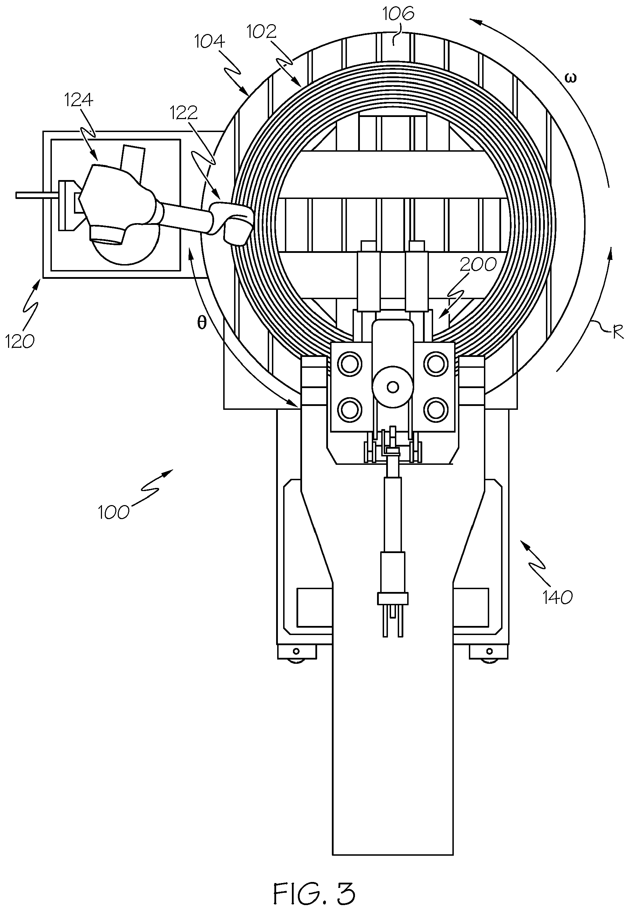

FIG. 3 is a top view of the system 100 of FIG. 1 illustrating the simultaneous operation of the deposition assembly 120 and the compression rig 140. In the illustrated example, the build table 104 is rotating the component 102 at a rotation speed ω as the component 102 is being built. The rotation speed ω is variable and, therefore, may be increased or decreased as needed depending on the particular build requirements of the component 102. For example, the rotation speed ω may depend on the speed at which feedstock material is introduced to the deposition head 122 and the temperature applied by the energy source 130. In addition, torque applied to the build table 104 and the rotation speed ω thereof may be selected to sufficiently counteract the compression forces applied by rolling of the compression head 200.

Also in the illustrated example, angular orientation between the compression head 200 of the compression rig 140 and the deposition head 122 of the deposition assembly 120 is represented by an angle θ. The angle θ is determined by the orientation and position of the deposition head 122 and the compression head 200 relative to each other. The angle θ between the compression head 200 and the deposition head 122 may be increased or decreased by articulating the robotic arm 124 and/or adjusting the position of the various components of the compression rig 140 as described herein. Also, the distance/relationship between the deposition head 122 and the compression head 200 may vary based on the size of the component 102 to be formed, for example, for a larger version of the component 102 the distance between them may be smaller as compared to a smaller version of the component 102, depending on the desired rolling temperature.

By orienting the deposition assembly 120 of the compression rig 140 as illustrated, it is possible to simultaneously compress the component 102 with the compression head 200 while simultaneously performing material deposition via the deposition head 122 to further build the component 102 (i.e., at the same time). Thus, it is not necessary to stop the deposition process (performed by the deposition head 122) to perform the compression process via the compression head 200. The deposition process and the compression process are conducted simultaneously on different sections/areas of the component 102, with the compression process being performed on a section of the layer of feedstock material at a constant temperature, which thereby improves microstructure homogeneity. With this arrangement, it is possible to perform both warm rolling and cold rolling due to the angle θ between the compression rig 140 and the deposition assembly 120, which may be adjusted to facilitate sufficient cooling between deposition and rolling. If the compression rig 140 and the deposition assembly 120 were combined into a single component, the roller could only roll warm/hot feedstock materials recently deposited. Such a process would not allow for the introduction of sufficient compression (if at all) in the deposited material. Hot rolling can be implemented by positioning the compression rig 140 near the melt pool 136 or reheating the material near the load source 144 as needed.

FIGS. 4A-4D illustrate yet another alternate embodiment of a DED additive manufacturing system 400 of FIG. 1. In particular, FIGS. 4A-4D illustrate an alternate embodiment of the compression rig 140, wherein the compression rig 140 is configured to move relative to the deposition assembly 120.

In the illustrated example, the compression rig 140 is provided on a base 502, which is positioned proximate to the deposition assembly 120 and the build table 104. In this embodiment, the deposition assembly 120 is provided on its own base structure 504, but in other examples, the deposition assembly 120 may be provided on the base 502 or elsewhere. Also, at least a pair of tracks 506 are provided on an upper surface 508 of the base 502.

The compression rig 140 includes a slidable support structure 510 that is configured to slide upon the tracks 506. As shown, the slidable support structure 510 may translate on the tracks 506, relative to the base 502, laterally in the Y-dimension. Also, the compression rig 140 includes an actuator 512 arranged to cause translation of the slidable support structure 510 upon the tracks 506 in the Y-dimension. Accordingly, the slidable support structure 510 has a bottom side (obscured from view) that is designed to mate with and ride on the tracks 506 to allow such translation. Also, at least a pair of tracks 514 are provided on a front surface 516 of the slidable support structure 510.

The compression rig 140 includes a slidable positioning structure 520 that is configured to slide upon the tracks 514. As shown, the slidable positioning structure 520 may translate on the tracks 514, relative to the slidable support structure 510, vertically in the Z-dimension. Also, the compression rig 140 includes an actuator 522 arranged to cause translation of the slidable positioning structure 520 upon the tracks 514 in the Z-dimension. Accordingly, the slidable positioning structure 520 has a rear side (obscured from view) that is designed to mate with and ride on the tracks 514 to allow such translation.

The compression rig 140 includes an adjustable support member 530 and a compression head 300 supported by the adjustable support member 530. The compression head 300 may be similar to the compression head 200 described with reference to FIG. 2 and, therefore, rotatably retains a plurality of rollers at various orientations so as to roll upon certain portions of the component 102. In the illustrated embodiment, the compression head 300 supports at least one inside roller 302 positioned and oriented to contact the interior side surface 304 of the component 102 and to roll there-along as the component 102 is rotated by the build table 104. The compression head 300 also supports at least one outside roller 306 positioned and oriented to contact the exterior side surface 308 of the component 102 and to roll there-along as the component 102 is rotated by the build table 104. In addition, the compression head 300 supports at least one top roller 560 positioned and oriented to contact the top surface 310 of the rim of the component 102 and to roll there-along as the component 102 is rotated by the build table 104.

Each of the side rollers 302, 306 and the top roller 560 are freely rotatably about their respective axis of rotation, and they are each rotated when brought into contact with their respective portion of the component 102 that they are designed to contact (i.e., the interior side surface 304, the exterior side surface 308, and the top surface 310 of the rim of the component 102, respectively) and as the component 102 is rotated. Thus, rotation of the component 102 causes roller rotation and the rollers need not include any separate drive train(s) to cause their independent rotation. However, in some examples, any one or more of the rollers may be powered.

The side rollers 302, 306 and the top roller 560 may each be configured to apply a compressive load to a respective portion of the component 102. For example, a first compression actuator 322 may be configured to move the inside roller 302 toward the outside roller 306 and the interior side surface 304 of the component 102, and a second compression actuator 326 may be configured to move the outside roller 306 toward the inside roller 302 and the exterior side surface 308 of the component 102. In some embodiments, the compression actuators 322, 326 cause movement of their respective side rollers 302, 306 independent of each other such that, for example, the at least one inside roller 302 could be moved toward the at least one outside roller 306 without a corresponding movement of the at least one outside roller 306 toward the at least one inside roller 302, and *vice versa.* In some examples, the compression actuators 322, 326 operate in unison such that, for example, they may cause movement of the side rollers 302, 306 together with corresponding movements toward the component 102, thereby pinching the component 102, and cause the side rollers 302, 306 to move apart from each other in unison with corresponding movements away from the component 102. In some examples where the side rollers 302, 306 operate in unison to move towards each other and away from each other, the compression actuators 322, 326 may operate in unison to pinch the side rollers 302, 306 together so as to enhance pinching compression force.

The top roller 560 may provide compression to the top surface 310 of the rim of the component 102 via actuation of a linear actuator 531 which may be operated to drive the compression head 300 and the top roller 560 rotatably supported therein toward the component 102, for example, in the Z-dimension. Thus, the side rollers 302, 306 pinch the opposite sides of the component 102 via lateral compression while the top roller 560 presses the top surface 310 of the component 102 via vertical compression provided by the linear actuator 531. In embodiments, load sensors may be operatively associated with each of the side rollers 302, 306 and the top roller 560, so as to determine the load applied thereby.

The adjustable support member 530 is coupled to the slidable positioning structure 520 via a rotary joint 532. The rotary joint 532 includes a first side/plate attached to the slidable positioning structure 520 and a second side/plate attached to the adjustable support member 530, and the rotary joint 532 is configured to permit relative rotation between the first and second sides/plates, about an axis of rotation of the rotary joint 532. Accordingly, the adjustable support member 530 may rotate, relative to the slidable positioning structure 520, about the rotation axis of the rotary joint 532 that, in the illustrated example, is parallel to the X-axis.

The compression rig 140 may include an actuator 534 arranged to cause rotation of the adjustable support member 530 about the rotation axis of the rotary joint 532. In the illustrated example, the actuator 534 is supported on the slidable positioning structure 520. The actuator 534 includes a drive rod 536 and actuation of the actuator 534 causes extension or retraction of the drive rod 536 from the actuator 534. A distal end of the drive rod 536 is coupled to the second side/plate of the rotary joint 532. Accordingly, extension or retraction of the drive rod 536 causes relative rotation between the first and second sides/plates of the rotary joint 532 which thereby causes rotation of the adjustable support member 530 relative to the slidable positioning structure 520.

The compression head 300 is coupled to the adjustable support member 530 via a rotary joint 540. The rotary joint 540 defines an axis of rotation that, in the illustrate example, is parallel to Z-dimension. The rotary joint 540 includes a first side/plate attached to the adjustable support member 530 and a second side/plate attached to the compression head 300, and the rotary joint 540 is configured to permit relative rotation between the first and second sides/plates, about its axis of rotation. Accordingly, the compression head 300 may rotate, relative to adjustable support member 530, about the rotation axis of the rotary joint 540. Also, the compression rig 140 includes an actuator 542 arranged to cause rotation of the compression head 300 about the rotation axis of the rotary joint 540. In the illustrated example, the actuator 542 is supported on the adjustable support member 530, and the actuator 542 includes a drive gear (obscured from view) having teeth that mesh with a driven gear 544 fixed on the second side/plate of the rotary joint 540. The actuator 542 causes rotation of the drive gear, and rotation of the drive gear in turn rotates the driven gear 544 and the compression head 300 which is fixed to the driven gear 544.

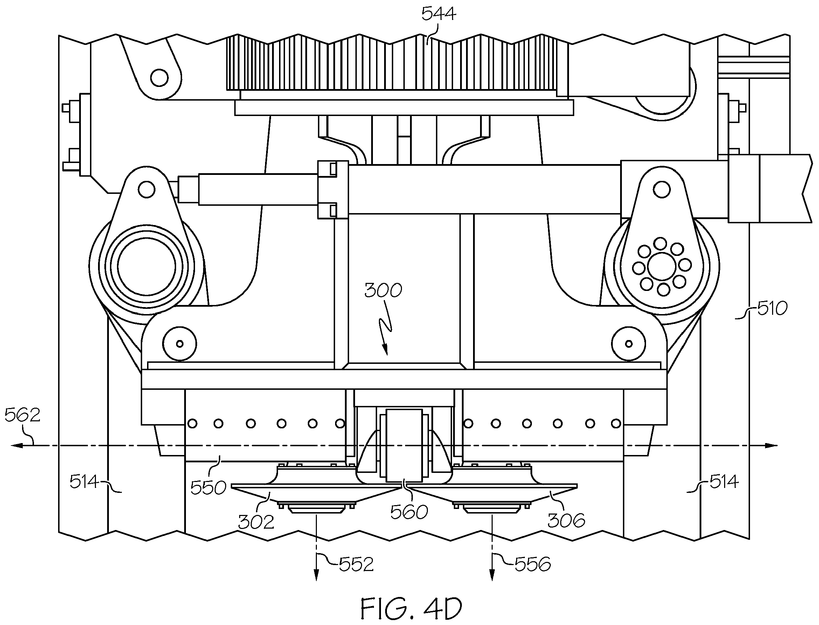

FIG. 4D illustrates a detailed front view of the compression head 300, according to one or more embodiments of the present disclosure. In the illustrated example, the compression head 300 includes a frame 550 configured to support the various rollers. The frame 550 is fixed to the driven gear 544 such that it rotates with the driven gear 544 upon actuation of the actuator 542 as described above. As shown, the side rollers 302, 306 are each rotatably coupled to the frame 550 such that each of the side rollers 302, 306 may rotate about a respective axis of rotation 552, 556. Further, the frame 550 also supports the top roller 560. The top roller 560 is rotatably coupled to the frame 550 such that it may rotate about an axis of rotation 562 thereof. Also, as previously mentioned, the side rollers 302, 306 may be pinched together or expanded apart (in a direction parallel with the axis 562) via the compression actuators 322, 326 which are also supported on the frame 550. In addition, the top roller 560 may be pressed upward or downward (in a direction parallel with the axes 552, 556) via the linear actuator 531 which may be supported on the adjustable support member 530.

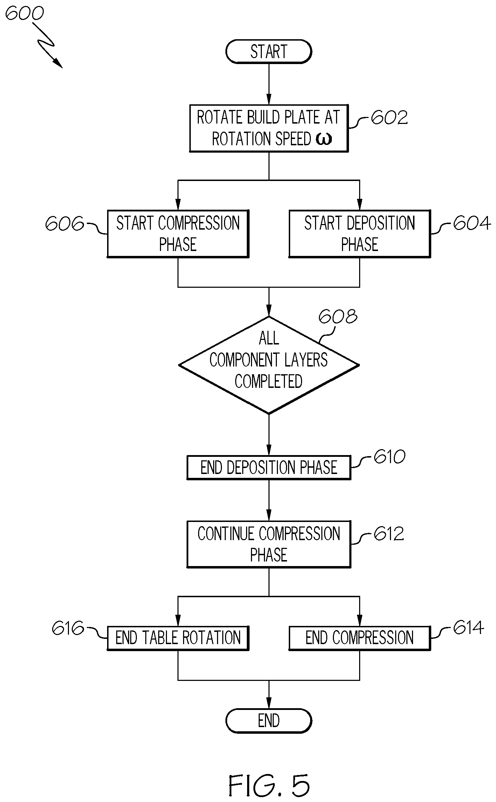

Referring now to FIG. 5, a method 600 of DED additive manufacturing a component is shown, according to one or more embodiments of the present disclosure. The method 600 demonstrates the efficiency of the embodiments described herein, and how the compression phase may be performed simultaneously or in parallel with the deposition phase, in substantially the same time. Stated differently, performing the compression phase in the manner described herein does not add substantial time to the overall process time. The method 600 may be performed by the systems described with respect to FIGS. 1-2 herein. It should be appreciated that the method 600 may also be performed by other additive manufacturing apparatuses including, without limitation, the system depicted in FIGS. 4A-4D.

In a step 602 of the method, the build table 104 starts rotating at the rotation speed ω. Then, in a step 604 the deposition phase of the method 600 begins. In the deposition phase, the deposition head 122 outputs a stream of melted feedstock material that, when rotated by the build table 104 forms a circular stream (of varying diameter depending on radial movement of the deposition head 122) that layers upon itself upon a complete rotation of the build table 104. In a step 606, the compression phase begins. The compression phase begins after the start of the deposition phase, as it takes a short amount of time for the build table 104 to rotate the melted feedstock material to the location of the compression head 300. The amount of time between the start of the deposition phase until the start of the compression phase is calculated by dividing the angle θ by the rotation speed ω (i.e., t_start = θ / ω). Thereafter, the compression phase and the deposition phase may operate simultaneously, as shown in the flow chart of FIG. 5 which illustrates step 604 and step 606 being performed in parallel with each other, until the deposition head 122 has deposited the last amount of material needed for the component 102, as indicated at step 608, thereby ending the deposition phase, as indicated at step 610. However, because the compression phase trails the deposition phase due to the positioning of the compression head 300 behind the deposition head 122, the compression phase will continue for a slight amount of time after the deposition phase ends, as indicated at step 612. The amount of time that the compression phase continues after ending of the deposition phase is calculated by dividing the angle θ by the rotation speed ω (i.e., t_end = θ / ω). Once the compression head 300 has compressed the last layer portion deposited by the deposition head 122, the compression phase may end, as indicated by step 614, and the build table may stop rotating, as indicated by step 616.

The method 600 may include various other steps relating to aspects of the present disclosure described herein. For example, the method 600 may include a step of controlling application of the compressive load while depositing the stream of feedstock material. Also, the method 600 may include a step of controlling the position of the compression head while depositing the stream of feedstock material.

The method 600 provides a substantial time savings compared to existing systems that perform the deposition phase and the compression phase one after another. For example, the total process time of existing systems equals deposition time plus compression time (i.e., T_old = t_deposition + t_compression). However, the total process time of the method 600 (or utilizing systems disclosed herein) deposition time plus amount of time that compression phase continues after ending of the deposition phase (i.e., T_new = t_deposition + t_end, where t_end = θ / ω). Utilizing embodiments herein, it is possible to conduct the deposition process and the compression process simultaneously on different sections/areas of the component 102, with the compression process being performed on a section of the layer of feedstock material at a constant temperature, which thereby improves microstructure homogeneity. Moreover, with this arrangement, it is possible to perform cold rolling.

Further aspects of the present disclosure are provided by the subject matter of the following clauses:
Clause 1: A directed energy deposition (DED) additive manufacturing system for manufacturing a component from a feedstock material, comprising: a rotary build table that is rotatable about a vertical axis of the rotary build table at a rotation speed, the rotary build table defining a horizontal build surface on which the component is supportable; a deposition assembly having a deposition head through which melted feedstock material may be deposited at a deposition rate, wherein, upon rotation of the rotary build table, continuous deposition of melted feedstock material builds layers of feedstock material; a compression rig comprising a compression head that is positionable proximate to the deposition head, the compression head having at least one roller operable to apply a compressive load to a previously deposited layer of feedstock material during deposition of the melted feedstock material; and a controller communicably coupled to the deposition assembly and the compression rig, wherein the controller controls application of the compressive load as the deposition head deposits melted feedstock material
Clause 2: The DED additive manufacturing system of any of the above clauses, wherein the controller controls a location at which the compressive load is applied relative to the deposition head.
Clause 3: The DED additive manufacturing system of any of the above clauses, wherein the controller controls a magnitude of the compressive load.
Clause 4: The DED additive manufacturing system of any of the above clauses, wherein the controller controls the deposition rate during application of the compressive load.
Clause 5: The DED additive manufacturing system of any of the above clauses, wherein the controller is also communicably coupled to the rotary build table and controls the rotation speed of the rotary build table during application of the compressive load.
Clause 6: The DED additive manufacturing system of any of the above clauses, wherein the deposition assembly includes a robotic arm comprising a plurality of links that articulate relative to each other so as to adjust a position of the deposition head supported on a distal most link of the plurality of links.
Clause 7: The DED additive manufacturing system of any of the above clauses, wherein the robotic arm moves the deposition head nearer to or further from the compression rig.
Clause 8: The DED additive manufacturing system of any of the above clauses, wherein the deposition head is movable relative to the compression rig during deposition and compression.
Clause 9: The DED additive manufacturing system of any of the above clauses, wherein the compression rig includes a first actuator that moves the at least one roller vertically parallel to the vertical axis to thereby apply the compressive load to a top side of the layer of feedstock material when the at least one roller is moved toward the rotary build table.
Clause 10: The DED additive manufacturing system of any of the above clauses, wherein the at least one roller includes at least one inside roller positioned to roll an interior side of the layer of feedstock material, at least one outside roller positioned to roll an outer side of the layer, and at least one top roller positioned to roll a top side of the layer.
Clause 11: The DED additive manufacturing system of any of the above clauses, wherein the compression rig includes at least one second actuator that moves the at least one outside roller and the at least one inside roller towards each other or apart from each other.
Clause 12: The DED additive manufacturing system of any of the above clauses, wherein the at least one second actuator simultaneously moves the at least one inside roller and the at least one outside roller in unison.
Clause 13: The DED additive manufacturing system of any of the above clauses, wherein the compression rig includes at least one third actuator that moves the at least one roller horizontally and parallel to the horizontal build surface, and thereby accommodates differing diameters of the component.
Clause 14: The DED additive manufacturing system of any of the above clauses, wherein the deposition head includes a plasma transferred arc heat source.
Clause 15: A DED additive manufacturing system for manufacturing a component from a feedstock material, comprising: a rotary build table that is rotatable about a vertical axis of the rotary build table at a rotation speed, the rotary build table defining a horizontal build surface on which the component is supportable; a deposition assembly having a deposition head through which melted feedstock material may be deposited at a deposition rate, wherein, upon rotation of the rotary build table, continuous deposition of melted feedstock material may build layers of feedstock material; a compression rig positioned proximate the deposition assembly and having a compression head operable to continuously apply a compressive load to deposited melted feedstock material during deposition of the melted feedstock material, the compression head having a plurality of rollers which apply the compressive load to a previously deposited layer of feedstock material, the compression rig having a first actuator that moves the plurality of rollers vertically parallel to the vertical axis to thereby apply the compressive load to a top side of the previously deposited layer of feedstock material when moved toward the rotary build table, and the compression rig having at least one second actuator that moves the plurality of rollers horizontally and parallel to horizontal build surface to thereby apply the compressive load to an interior side and/or an outer side of the previously deposited layer of feedstock material; and a controller communicably coupled to the deposition assembly and the compression rig, wherein the controller controls application of the compressive load as the deposition head deposits melted feedstock material.
Clause 16: The DED additive manufacturing system of any of the above clauses, wherein the deposition assembly comprises a robotic arm having a plurality of links that may articulate relative to each other so as to adjust position of the deposition head which is supported on a distal most link of the plurality of links, wherein the robotic arm moves the deposition head relative to the compression head during deposition and compression, and the controller controls position of the deposition head relative to the compression head.
Clause 17: The DED additive manufacturing system of any of the above clauses, wherein the compression rig is operable to move the compression head relative to the deposition head, and the controller controls position of the compression head relative to the deposition head.
Clause 18: The DED additive manufacturing system of any of the above clauses, wherein the plurality of rollers includes at least one inside roller positioned to roll the interior side of the previously deposited layer of feedstock material, at least one outside roller positioned to roll the outer side of the previously deposited layer, and at least one top roller positioned to roll the top side of the previously deposited layer, and wherein the at least one second actuator moves the at least one outside roller and the at least one inside roller towards each other or apart from each other.
Clause 19: A method of manufacturing a component with forging-like properties, the method comprising: rotating a build table at a rotation speed, the build table defining a horizontal build surface; depositing a stream of feedstock material via a deposition head at a deposition rate, wherein continuous deposition of feedstock material during rotation of the build table forms layers of feedstock material; applying a compressive load to formed layers of feedstock material while the deposition head deposits the stream of feedstock material; and continuing, for a time period, rotation of the build table and application of the compressive load after stopping deposition of the stream of feedstock material.
Clause 20: The method of any of the above clauses, further comprising: controlling application of the compressive load while depositing the stream of feedstock material; controlling deposition of the stream of feedstock material while applying the compressive load to the previously formed layers of feedstock material; and/or controlling rotation speed of the build table during deposition and/or applying the compressive load.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A directed energy deposition (DED) additive manufacturing system (100) for manufacturing a component (102) from a feedstock material, comprising:
a rotary build table (104) that is rotatable about a vertical axis (Z) of the rotary build table (104) at a rotation speed, the rotary build table (104) defining a horizontal build surface (106) on which the component (102) is supportable;
a deposition assembly (120) having a deposition head (122) through which melted feedstock material may be deposited at a deposition rate, wherein, upon rotation of the rotary build table (104), continuous deposition of melted feedstock material builds layers of feedstock material;
a compression rig (140) comprising a compression head (300) that is positionable proximate to the deposition head (122), the compression head (300) having at least one roller (302, 306, 560) operable to apply a compressive load to a previously deposited layer of feedstock material during deposition of the melted feedstock material; and
a controller (150) communicably coupled to the deposition assembly (120) and the compression rig (140), wherein the controller (150) controls application of the compressive load as the deposition head (122) deposits melted feedstock material.

2. The DED additive manufacturing system (100) of claim 1, wherein the controller (150) controls a location at which the compressive load is applied relative to the deposition head (122).

3. The DED additive manufacturing system (100) of any one of claims 1-2, wherein the controller (150) controls a magnitude of the compressive load.

4. The DED additive manufacturing system (100) of any one of claims 1-3, wherein the controller (150) controls the deposition rate during application of the compressive load.

5. The DED additive manufacturing system (100) of any one of claims 1-4, wherein the controller (150) is also communicably coupled to the rotary build table (104) and controls the rotation speed of the rotary build table (104) during application of the compressive load.

6. The DED additive manufacturing system (100) of any one of claims 1-5, wherein the deposition assembly (120) includes a robotic arm (124) comprising a plurality of links (126) that articulate relative to each other so as to adjust a position of the deposition head (122) supported on a distal most link (128) of the plurality of links (126).

7. The DED additive manufacturing system (100) of claim 6, wherein the robotic arm (124) moves the deposition head (122) nearer to or further from the compression rig (140), wherein the deposition head (122) is movable relative to the compression rig (140) during deposition and compression.

8. The DED additive manufacturing system (100) of any one of claim 1-7, wherein the compression rig (140) includes a first actuator (232) that moves the at least one roller (302, 306, 560) parallel to the vertical axis (Z) to thereby apply the compressive load to a top side of the layer of feedstock material when the at least one roller (302, 306, 560) is moved toward the rotary build table (104).

9. The DED additive manufacturing system (100) of any one of claims 1-8, wherein the at least one roller (302, 306, 560) includes at least one inside roller (302) positioned to roll an interior side of the layer of feedstock material, at least one outside roller (306) positioned to roll an outer side of the layer, and at least one top roller (560) positioned to roll a top side of the layer.

10. The DED additive manufacturing system (100) of any one of claims 1-9, wherein the deposition head (122) includes a plasma transferred arc heat source.

11. A DED additive manufacturing system (100) for manufacturing a component (102) from a feedstock material, comprising:
a rotary build table (104) that is rotatable about a vertical axis (Z) of the rotary build table (104) at a rotation speed, the rotary build table (104) defining a horizontal build surface (106) on which the component (102) is supportable;
a deposition assembly (120) having a deposition head (122) through which melted feedstock material may be deposited at a deposition rate, wherein, upon rotation of the rotary build table, continuous deposition of melted feedstock material may build layers of feedstock material;
a compression rig (140) positioned proximate the deposition assembly (120) and having a compression head (300) operable to continuously apply a compressive load to deposited melted feedstock material during deposition of the melted feedstock material, the compression head (300) having a plurality of rollers (302, 306, 560) which apply the compressive load to a previously deposited layer of feedstock material, the compression rig (140) having a first actuator (232) that moves the plurality of rollers (302, 306, 560) parallel to the vertical axis (Z) to thereby apply the compressive load to a top side of the previously deposited layer of feedstock material when moved toward the rotary build table (104), and the compression rig (140) having at least one second actuator (322, 326) that moves the plurality of rollers (302, 306) horizontally and parallel to the horizontal build surface (106) to thereby apply the compressive load to an interior side and/or an outer side of the previously deposited layer of feedstock material; and
a controller (150) communicably coupled to the deposition assembly (120) and the compression rig (140), wherein the controller (150) controls application of the compressive load as the deposition head (122) deposits melted feedstock material.

12. The DED additive manufacturing system (100) of claim 11, wherein the deposition assembly (120) comprises a robotic arm (124) having a plurality of links (126) that may articulate relative to each other so as to adjust position of the deposition head (122) which is supported on a distal most link (128) of the plurality of links (126), wherein the robotic arm (124) moves the deposition head (122) relative to the compression head (300) during deposition and compression, and the controller (150) controls position of the deposition head (122) relative to the compression head (300).

13. The DED additive manufacturing system (100) of any one of claims 11-12, wherein the compression rig (140) is operable to move the compression head (300) relative to the deposition head (122), and the controller (150) controls position of the compression head (300) relative to the deposition head (122).

14. A method (600) of manufacturing a component (102) with forging-like properties, the method (600) comprising:
rotating a build table (104) at a rotation speed, the build table (104) defining a horizontal build surface (106);
depositing a stream of feedstock material via a deposition head (122) at a deposition rate, wherein continuous deposition of feedstock material during rotation of the build table (104) forms layers of feedstock material;
applying a compressive load to formed layers of feedstock material while the deposition head (122) deposits the stream of feedstock material; and
continuing, for a time period, rotation of the build table (104) and application of the compressive load after stopping deposition of the stream of feedstock material.

15. The method (600) of claim 14, further comprising:
controlling application of the compressive load while depositing the stream of feedstock material;
controlling deposition of the stream of feedstock material while applying the compressive load to the formed layers of feedstock material; and
controlling rotation speed of the build table (104) during deposition and/or applying the compressive load.
